# EUROPEAN PATENT SPECIFICATION

(11) **EP 1 237 071 B1**
(45) Date of publication and mention of the grant of the patent: **03.05.2006**
(21) Application number: 01105024.2
(22) Date of filing: 01.03.2001
(51) Int. Cl.: G06F 7/58

(54) **Method for generating a random number and electronic apparatus having a memory for storing a random number**
Verfahren zur Erzeugung einer Zufallszahl und elektronisches Gerät mit Speicher zur Speicherung einer Zufallszahl
Méthode à générer un numéro aléatoire et appareil électronique ayant une mémoire pour stocker un numéro aléatoire

(43) Date of publication of application: 04.09.2002
(73) Proprietor: MATSUSHITA ELECTRIC INDUSTRIAL CO., LTD., Kadoma-shi, Osaka 571-8501 (JP)
(72) Inventor: Räth, Detlef, 31234 Edemissen (DE); Keib, Frank, 31224 Peine (DE); Trotzke, Hendrik, 31241 Ilsede (DE)
(74) Representative: Lins, Edgar

(56) References cited:
- EP-A- 0 011 050
- EP-A- 0 365 930
- EP-A- 0 449 265
- US-A- 6 076 097
- SCHNEIER B.: 'Applied Cryptography Second Edition' APPLIED CRYPTOGRAPHY 1996, NEW YORK, JOHN WILEY & SONS, US, pages 421 - 428, XP002260802

## Description

The invention relates to a method for generating a random number in an electronic video signal receiving apparatus.

Furthermore, the invention relates to an electronic video signal receiving apparatus having a memory for storing a random number and including a stage for processing a received video signal as a periodic signal and a generator for a predetermined signal not synchronised with said periodic signal upon an external action.

Electronic apparatus suited for processing electronic data regularly include a memory for storing a random number which is e.g. used as an identification number of the apparatus. In order to establish a sufficient safety against finding the random number by trials in order to misuse the apparatus the random number has to be chosen from a sufficient large amount of potential numbers. The statistic safety obtained thereby is, however, only obtained if the random number is a true random number so that the number is in no way predictable.

Known methods of generating random numbers have proved to be not truly random, i.e. the numbers are predictable maybe by means of a pretty complicated algorithm. A further disadvantage of known methods is caused by more or less expensive additional means for generating the random number.

EP 0 449 265 A2 discloses a random signal generator for a data processing apparatus. The generation of the random number is based on a counter working independently from all functions of the data processing apparatus.

Upon an external event, e.g. by pressing a predetermined key or key combination on a keyboard, the actual state of the counter is used as a starting value for a random number generating algorithm. The starting value is stored and will be replaced by a new starting value if the predetermined key or key combination is pressed again.

A similar arrangement is known from EP 0 011 050 A1. A ring counter is triggered continuously by clock pulses. In case a key of a keyboard is pressed the actual state of the counter is transferred to a first-in-first-out memory which has a capacity to store e.g. ten counter states. Consequently, the last ten counter states are used for generating the random number. Again a continuously triggered counter is used for generating the random number.

It is an object of the present invention to allow the generation of a true random number with little expenses.

According to the present invention this object is achieved by a method for generating a random number in an electronic apparatus comprising the steps of
- determining the time of an externally initiated event within the apparatus which externally initiated event not being synchronised to any signal within the apparatus,
- using a received video signal as a periodic signal and determining the state of a periodic signal within the apparatus in relation to the time of said externally initiated event, and
- transforming said determined state of said periodic signal into a digital amount, being the random number.

According to the present invention a periodic video signal processed within the apparatus is put in relation to an externally initiated event by which a predetermined signal, like a pulse, is produced within the apparatus. Care must be taken that the predetermined signal is not synchronised with the periodic signal, in order to guarantee the random number to be not predictable.

For avoiding any unintentional synchronisation of the externally initiated signal with the periodic signal a signal generated outside the apparatus and received by said apparatus from outside may be used as the periodic signal the state of which being determined. This is easily achieved due to the fact that the apparatus is a video signal receiving apparatus and a video signal is used as said periodic signal. Most preferably synchronous pulses, preferably fields synchronous pulses of the video signals may be used as the periodic signal.

The above-mentioned object of the invention may also be achieved by an electronic video signal receiving apparatus having a memory for storing a random number and including a stage for processing a received video signal as a periodic signal and a generator for a predetermined signal not synchronised with said periodic signal upon an external action which is characterised in that a control determines the time of the occurrence of said predetermined signal, determines the state of said periodic signal in relation to said determined time, obtaining said determined state of said periodic signal in digitised form as said random number and transfers said random number into the memory.

The present invention, its advantages and advantageous aspects will be more fully understood by the detailed description of a preferred embodiment with reference to the accompany drawings, wherein
- **Fig. 1**: shows an example for a periodic video signal and an asynchronous event producing an asynchronous pulse, and
- **Fig. 2**: shows a schematic block diagram of the parts of an electronic apparatus relevant for performing the present invention.

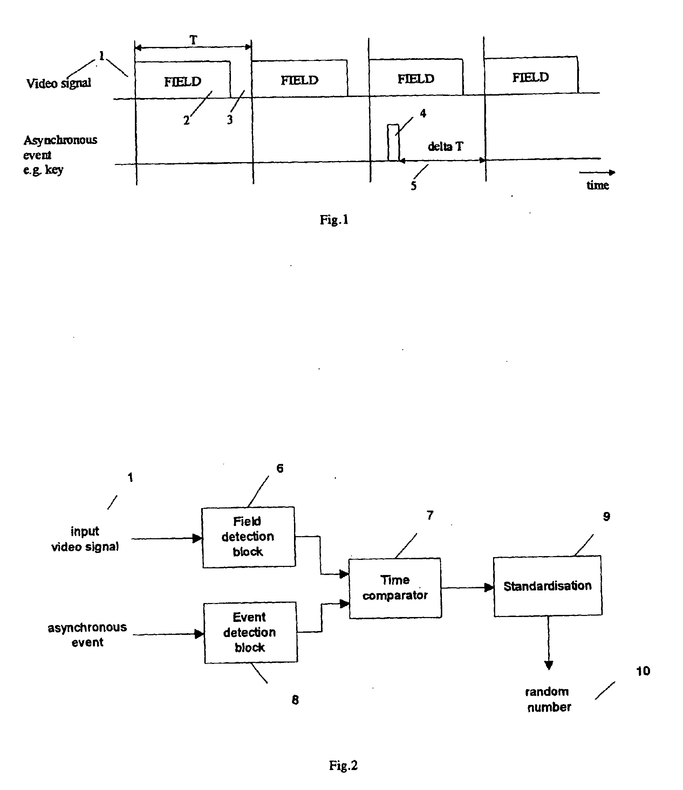

Figure 1 shows a video signal 1 having a periodic length T which is in the present case defined by (vertical) field sync pulses starting a block 2 wherein the content of a vertical video frame is contained. After a vertical blanking gap 3 the next field is started by a field sync pulse. To an arbitrary time an asynchronous event is initiated within the apparatus, e.g. by pressing a key of the apparatus, e.g. for switching the apparatus on into an active state. By said event a predetermined signal in form of a rectangular pulse 4 is produced. Within the apparatus the time period delta T 5 between the falling flank of the pulse 4 and the start of the next field block 2 is determined and in digital form used as the random number.

For working according the method of figure 1 an apparatus indicated in figure 2 is used. The input video signal 1 is processed in a field detection block 6 wherein the beginning of the field 2 is detected and characterised by an output pulse inputted to one input of a time comparator 7.

An asynchronous event, e.g. the pressing of a key of the apparatus is detected by an event detection block 8 outputting pulse 4 to a second input of time comparator. Time comparator 7 compares the period of time delta T 5 between both input pulses and outputs said delta T 5 to a standardisation circle 9 which produces a digital number corresponding to delta T 5 and outputs the digital number as random number 10 to a (not shown) memory for said random number 9.

By this way random number 10 may be generated and transmitted to memory for random number 10 by using components and stages of the electronic apparatus which usually exist within said apparatus so that additional components and stages are not necessary. Therefore, random number 10 may be generate in a simple and cheap way.

## Claims

1. Method for generating a random number in a video signal receiving apparatus, comprising the steps of
- determining the time of an externally initiated event within the apparatus which externally initiated event not being synchronised to any signal within the apparatus,
- using a received video signal as a periodic signal (1) and determining the state of a periodic signal (1) within the apparatus in relation to the time of said externally initiated event, and
- transforming said determined state of said periodic signal (1) into a digital amount, being the random number (10).

2. Method according to claim 1, wherein the periodic signal (1), the state of which being determined, is a signal generated outside the apparatus and received by said apparatus from outside.

3. Method according to claim 2, wherein synchronous pulses of said video signal are used as said periodic signal (1).

4. Method according to claim 3, wherein field synchronous pulses are used as said periodic signal (1).

5. Method according to one of the claims 1 to 4, wherein a time period delta T (5) between the occurrence of said externally initiated event and a periodic state of said periodic signal (1) is determined and digitised into said digital amount.

6. Method according to claim 5, wherein a counter is started by said externally initiated event and stopped by said periodic state of said periodic signal (1).

7. Method according to one of the claims 1 to 4, wherein an amplitude of the periodic signal (1) at the time of the occurrence of said externally initiated event is digitised into said digital amount.

8. Method according to daim 7, wherein the amplitude is digitised by an a-d-converter.

9. Electronic video signal receiving apparatus having a memory for storing a random number (9) and including a stage for processing a received video signal as a periodic signal (1) and a generator (8) for a predetermined signal (4) not synchronised with said periodic signal (1) upon an external action, **characterised in that** a control determines the time of the occurrence of said predetermined signal (4) determines the state of said periodic signal (1) in relation to said determined time, obtaining said determined state of said periodic signal (1) in digitised form as said random number (10) and transfers the random number (9) into the memory.

10. Electronic video signal receiving apparatus according to claim 9, **characterised in that** the control starts a counter upon occurrence of the predetermined signal (4) and stops said counter upon detection of a periodic state of the periodic signal (1).

11. Electronic video signal receiving apparatus according to claim 9, **characterised in that** the control comprises a sensing element sensing the amplitude of the periodic signal (1), and switches the output signal of the sensing element upon occurrence of said predetermined signal (4) to an a-d-converter the output of which is connected to the memory for the random number (10).

## Patentansprüche

1. Verfahren zur Erzeugung einer Zufallszahl in einem Videosignalempfangsgerät, **gekennzeichnet durch** die Schritte:
- Bestimmen des Zeitpunktes eines extern initiierten Ereignisses innerhalb der Einrichtung, wobei das extern initiierte Ereignis mit keinem Signal innerhalb des Geräts synchronisiert ist;
- Verwenden eines empfangenen Videosignals als periodisches Signal (1) und Bestimmen des Zustandes des periodischen Signals (1) innerhalb der Einrichtung in Abhängigkeit von dem Zeitpunkt des extern initiierten Ereignisses;
- Bestimmen einer Zufallszahl (10) **durch** Umwandeln des ermittelten Zustandes des periodischen Signals (1) in einen digitalen Betrag.

2. Verfahren nach Anspruch 1, bei dem das periodische Signal (1), dessen Zustand bestimmt werden soll, außerhalb des Geräts erzeugt wird und von dem Gerät von außen empfangen werden kann.

3. Verfahren nach Anspruch 2, bei dem Synchronimpulse des Videosignals als das periodische Signal (1) verwendet werden.

4. Verfahren nach Anspruch 3, bei dem Bildsynchronimpulse als das periodische Signal (1) verwendet werden.

5. Verfahren nach einem der Ansprüche 1 bis 4, bei dem eine Zeitspanne Delta T (5) zwischen dem Auftreten des extern initiierten Ereignisses und einem periodischen Zustand des periodischen Signals (1) bestimmt und in den digitalen Betrag umgewandelt wird.

6. Verfahren nach Anspruch 5, **gekennzeichnet durch** Starten eines Zählers durch das extern initiierte Ereignis und Stoppen des Zählers **durch** den periodischen Zustand des periodischen Signals (1).

7. Verfahren nach einem der Ansprüche 1 bis 4, bei dem eine Amplitude des periodischen Signals (1) zu dem Zeitpunkt des Auftretens des extern initiierten Ereignisses in den digitalen Betrag digitalisiert wird.

8. Verfahren nach Anspruch 7, bei dem die Amplitude in den digitalen Betrag mittels eines Analog-Digital-Wandlers digitalisiert wird.

9. Elektronisches Videosignalempfangsgerät mit einem Speicher zum Abspeichern einer Zufallszahl (9) und enthaltend eine Stufe zur Verarbeitung eines empfangenen Videosignals als ein periodisches Signal (1) sowie einen Generator (8) für ein nicht mit dem periodischen Signal (1) synchronisiertes vorbestimmtes Signal aufgrund eines äußeren Ereignisses, **dadurch gekennzeichnet, dass** eine Steuerung den Zeitpunkt des Auftretens des vorbestimmten Signals feststellt, den Zustand des periodischen Signals (1) in Bezug auf den festgestellten Zeitpunkt bestimmt, den festgestellten Zustand des periodischen Signals (1) in digitalisierter Form als die Zufallszahl (10) ermittelt und die Zufallszahl (9) in den Speicher überträgt.

10. Elektronisches Videosignalempfangsgerät nach Anspruch 9, **dadurch gekennzeichnet, dass** die Steuerung einen Zähler beim Auftreten des vorbestimmten Signals (4) startet und den Zähler bei der Detektion eines periodischen Zustandes des periodischen Signals (1) stoppt.

11. Elektronisches Videosignalempfangsgerät nach Anspruch 9, **dadurch gekennzeichnet, dass** die Steuerung ein Messelement zum Erfassen der Amplitude des periodischen Signals (1) enthält und das Ausgangssignal des Messelements beim Auftreten des vorbestimmten Signals (4) auf einen Analog-Digital-Wandler schaltet, dessen Ausgang mit dem Speicher für die Zufallszahl (10) verbunden ist.

## Revendications

1. Procédé pour générer un nombre aléatoire dans un dispositif recevant un signal vidéo, comprenant les étapes suivantes :
- déterminer le temps d'un événement initié extérieurement au dispositif, ledit événement initié extérieurement n'étant synchronisé avec aucun signal dans le dispositif ;
- utiliser un signal vidéo reçu comme un signal périodique (1) et déterminer l'état d'un signal périodique (1) dans le dispositif relativement au temps dudit événement initié extérieurement, et
- transformer ledit état déterminé dudit signal périodique (1) en une quantité numérique, représentant le nombre aléatoire (10).

2. Procédé selon la revendication 1, **caractérisé en ce que** le signal périodique (1), dont l'état est déterminé, est un signal généré à l'extérieur du dispositif et reçu par ledit dispositif de l'extérieur.

3. Procédé selon la revendication 2, **caractérisé en ce que** des impulsions synchrones dudit signal vidéo sont utilisées comme ledit signal périodique (1).

4. Procédé selon la revendication 3, **caractérisé en ce que** des impulsions synchrones de champ sont utilisées comme ledit signal périodique (1).

5. Procédé selon l'une des revendications 1 à 4, **caractérisé en ce qu'**une période de temps delta T (5), entre l'occurrence dudit événement extérieurement initié et un état périodique dudit signal périodique (1), est déterminée et numérisée dans ladite quantité numérique.

6. Procédé selon la revendication 5, **caractérisé en ce qu'**un compteur est démarré par ledit événement extérieurement initié et arrêté par ledit état périodique dudit signal périodique (1).

7. Procédé selon l'une des revendications 1 à 4, **caractérisé en ce qu'**une amplitude du signal périodique (1) au temps de l'occurrence dudit événement extérieurement initié, est numérisée dans ladite quantité numérique.

8. Procédé selon la revendication 7, **caractérisé en ce que** l'amplitude est numérisée par convertisseur analogique numérique a-d.

9. Dispositif électronique de réception de signal vidéo, ayant une mémoire pour stocker un nombre aléatoire (9) et comprenant un étage de traitement d'un signal vidéo reçu comme un signal périodique (1) et un générateur (8) pour un signal prédéterminé (4) non synchronisé avec ledit signal périodique (1) sur une action externe, **caractérisé en ce qu'**un contrôle détermine le temps d'occurrence dudit signal prédéterminé (4), détermine l'état dudit signal périodique (1) relativement audit temps déterminé, obtenant ledit état déterminé dudit signal périodique (1) sous une forme numérique comme ledit nombre aléatoire (10), et transfère le nombre aléatoire (9) dans la mémoire.

10. Dispositif électronique de réception de signal vidéo selon la revendication 9, **caractérisé en ce que** le contrôle démarre un compteur sur une occurrence du signal prédéterminé (4) et arrête ledit compteur sur détection d'un état périodique du signal périodique (1).

11. Dispositif électronique de réception de signal vidéo selon la revendication 9, **caractérisé en ce que** le contrôle comprend un élément capteur détectant l'amplitude du signal périodique (1), et commute le signal de sortie de l'élément capteur sur occurrence dudit signal prédéterminé (4) vers un convertisseur analogique numérique a-d dont la sortie est connectée à la mémoire pour le nombre aléatoire (10).
